# EUROPÄISCHE PATENTSCHRIFT

(11) **EP 4 065 522 B1**
(45) Veröffentlichungstag und Bekanntmachung des Hinweises auf die Patenterteilung: **12.03.2025**
(21) Anmeldenummer: 20780155.6
(22) Anmeldetag: 23.09.2020
(51) Int. Cl.: C02F 3/28, C02F 3/30, C02F 101/16

(54) **VERFAHREN ZUR BIOLOGISCHEN REINIGUNG VON NITRATHALTIGEM WASSER**
METHOD FOR THE BIOLOGICAL PURIFICATION OF NITRATE-CONTAINING WASTEWATER
PROCÉDÉ D'ÉPURATION BIOLOGIQUE DES EAUX USÉES CONTENANT DES NITRATES

(30) Priorität: 29.11.2019 DE 102019132449; 18.12.2019 DE 102019134959; 20.01.2020 DE 102020101182
(43) Veröffentlichungstag der Anmeldung: 05.10.2022
(73) Patentinhaber: WTE Wassertechnik GmbH, 45136 Essen (DE)
(72) Erfinder: WOTRUBEZ, Herbert, 65552 Limburg (DE); HENTSCHEL, Torsten, 45468 Mülheim an der Ruhr (DE); STEUERNAGEL, Leon, 51063 Köln (DE)
(74) Vertreter: Rommeswinkel, Marike
(86) Internationale Anmeldenummer: PCT/EP2020/076532
(87) Internationale Veröffentlichungsnummer: WO 2021/104711

(56) Entgegenhaltungen:
- CN-B- 102 964 035
- JP-A- 2003 154 393
- US-A- 4 756 831
- US-A1- 2005 150 829

## Beschreibung

Die vorliegende Erfindung stellt auf das technische Gebiet der biologischen Reduzierung der Nitratstickstoffkonzentration in nitrathaltigem Wasser, insbesondere Roh- und/oder Abwasser, auf Basis einer lithotrophen Nitratelimination ab.

**In** diesem Zusammenhang betrifft die vorliegende Erfindung ein Verfahren zur biologischen Reinigung von Rohwasser, insbesondere zur biologischen Reduzierung der Nitratstickstoffkonzentration in nitrathaltigem Rohwasser (Nitrogen Elimination System: "NELIS"), mit mikrobieller lithotropher Nitratelimination unter Einsatz und/oder Ansiedelung von Biomasse.

Bei Nitraten handelt es sich um wasserlösliche Salze der Salpetersäure, welche im Rahmen des Stickstoffkreislaufs durch metabolische Umsetzung von stickstoffhaltigen Verbindungen durch nitrifizierende Bakterien im Boden gebildet werden. Die Nitrate wiederum werden von Pflanzen aufgenommen und vom pflanzlichen Stoffwechsel als Stickstoffquelle genutzt oder von sogenannten denitrifizierenden (Boden-)Bakterien in atmosphärischen Stickstoff umgewandelt.

Durch menschliche Einflüsse, insbesondere den landwirtschaftlichen Einsatz von stickstoffhaltigen Düngern bzw. Gülle und Pflanzenschutzmitteln, wird jedoch der natürliche Stickstoffkreislauf gestört und es kommt zu einer übermäßigen Ansammlung von Nitrat im Boden. Aufgrund seiner guten Wasserlöslichkeit wird das Nitrat aus dem Boden ausgewaschen und gelangt ins Grundwasser. Infolgedessen weisen Grund- und Oberflächen- bzw. Brunnenwässer oftmals eine erhöhte Nitratkonzentration auf. Darüber hinaus kann der Nitratüberschuss im Grundwasser auch zu einer erhöhten Nitratkonzentration in Flüssen, Seen und Meeren führen.

Weiterhin sind auch Abwässer teilweise stark nitratbelastet. Dies gilt sowohl für industrielle als auch kommunale Abwässer, wobei Harnstoff aus Fäkalien und Eiweißverbindungen die häufigsten Nitratquellen sind. Vor dem Hintergrund der zuvor beschriebenen, mitunter starken Nitratbelastung von Grund- und Oberflächen- bzw. Brunnenwässern, d.h. sogenannten Rohwässern, können zudem auch Abwässer, welche bei der Aufbereitung von Rohwässern anfallen, nitratbelastet sein.

Erhöhte Nitratwerte in Grund-, Oberflächen- und Brunnenwasser bzw. Gewässern und nitratbelastete Abwässer sind in vielerlei Hinsicht problematisch. Besonders problematisch ist, dass durch die Infiltration von Nitrat in Grundwasser die Trinkwasserqualität zunehmend gefährdet wird. Auch wenn Nitrate bzw. Nitrat-Anionen als solches für Menschen und Tiere nicht toxisch sind, können sie im Körper in das toxische Nitrit und kanzerogene Nitrosamine umgewandelt werden. Die "Verordnung über die Qualität von Wasser für den menschlichen Gebrauch" (Trinkwasserverordnung - TrinkwV) legt daher für die Nitratkonzentration in Trinkwasser einen Grenzwert von maximal 50 mg/l fest.

Im Stand der Technik sind verschiedene chemisch-physikalische Verfahren zur Entfernung von Nitrat aus Roh- und Abwasser bekannt, wie zum Beispiel Ionenaustauscher, Umkehrosmose oder Nanofiltration. Die im Stand der Technik bekannten chemisch-physikalischen Verfahren sind jedoch teilweise umweltbelastend und darüber hinaus oftmals kosten- bzw. ressourcenintensiv und erfordern einen hohen apparativen Aufwand. Im Übrigen führen diese Verfahren, wie z.B. die Nitratentfernung mit Ionenaustauschern, nicht zwangsläufig zu einer Reduktion von Nitrat zu elementarem Stickstoff, sondern lediglich zu einer Bindung des Nitrats, so dass weitere, insbesondere chemische Nachbehandlungen für eine endgültige Nitratelimination notwendig sind.

Darüber hinaus besteht die Möglichkeit, den Stickstoffgehalt in Roh- und Abwässern durch biologische Verfahren, insbesondere unter Einsatz von Mikroorganismen, zu reduzieren. Biologische Verfahren sind gegenüber chemisch-physikalischen Verfahren deutlich umweltfreundlicher und ressourcenschonender. Darüber hinaus ist eine Umwandlung des Nitrats in elementaren bzw. atmosphärischen Stickstoff möglich. Dennoch sind die bislang bekannten biologischen Verfahren nur unter signifikantem bzw. verstärktem Einsatz von Hilfsstoffen im Einsatz. Hinzu kommt, dass biologische Verfahren eine ungünstige CO₂-Bilanz aufweisen können.

Heterotrophe Verfahren, insbesondere die heterotrophe Denitrifikation, zur Stickstoff- bzw. Nitratelimination weisen jedoch teilweise Nachteile auf: Die Verfahrensökonomie kann ungünstig sein, da ggf. externe Kohlenstoffquellen als Elektronendonatoren zugefügt werden müssen. Zudem führt das schnelle Wachstum der heterotrophen Bakterien häufig zu einer signifikanten Überschussschlammproduktion, welche sich wiederum negativ auf die Verfahrensökonomie auswirkt. Hinzu kommt, dass die biologischen heterotrophen Verfahren zum Nitratabbau in nitratbelastetem Wasser nur für Wässer mit einem hohen CSB (chemischen Sauerstoffbedarf) bzw. hohen BSB (biochemischen Sauerstoffbedarf) ökonomisch betreibbar sind. Ist der CSB bzw. BSB zu niedrig oder weist dieser eine geringe mikrobielle Verfügbarkeit auf, müssen zusätzlich externe Kohlenstoffquellen eingesetzt werden. Insbesondere nitratbelastete Rohwässer, wie z.B. Brunnen- oder Grundwasser, oder Abwässer ohne nennenswerte Mengen an organischen Substanzen weisen in der Regel lediglich einen geringen CSB bzw. BSB auf und können nicht oder nur unter Einsatz zusätzlicher Kohlenstoffquellen mit den bekannten biologischen Verfahren zur Nitratelimination behandelt werden.

Insgesamt sind somit sowohl die im Stand der Technik bekannten chemisch-physikalischen Verfahren zur Nitratelimination aus nitrathaltigem Wasser, insbesondere Roh- und/oder Abwässern, als auch die heterotrophen biologischen Nitrateliminationsverfahren mit Nachteilen verbunden und in mehrfacher Hinsicht verbesserungswürdig.

Das Dokument JP 2003 154393 A offenbart ein bekanntes Verfahren zur Elimination von Nitraten aus Abwasser.

Unter Berücksichtigung obiger Ausführungen in Bezug auf die Nachteile des Standes der Technik liegt der vorliegenden Erfindung die **Aufgabe** zugrunde, ein Verfahren zur Nitratentfernung aus nitrathaltigem Wasser, insbesondere Roh- und/oder Abwasser, bereitzustellen, welches die zuvor genannten Nachteile überwindet oder aber zumindest abschwächt. Insbesondere soll im Rahmen der vorliegenden Erfindung ein Verfahren bereitgestellt werden, welches dabei eine gute Nitratstickstoffabbaurate aufweist und ressourcenschonend, umweltfreundlich und universell für verschiedene Wässer einsetzbar ist und im Übrigen das Problem einer Überschlammproduktion vermeidet.

Zur **Lösung** der zuvor geschilderten Aufgabe schlägt die vorliegende Erfindung ein Verfahren zur biologischen Reinigung von Wasser, insbesondere zur biologischen Reduzierung der Nitratstickstoffkonzentration in nitrathaltigem Wasser, mit mikrobieller Nitratelimination gemäß dem Anspruch 1 vor.

Im Rahmen der vorliegenden Erfindung ist es überraschend gelungen, die im Stand der Technik beschriebenen Nachteile durch ein lithotrophes biologisches Nitrateliminationsverfahren zu überwinden, welches insbesondere auf einer speziell ausgewählten Biomasse basiert. In diesem Zusammenhang war es insbesondere völlig überraschend, dass mit dem eingesetzten Konsortium an Mikroorganismen unter lithotrophen Kultivierungs- bzw. Milieubedingungen der Abbau von Nitrat in nitrathaltigem Wasser möglich ist.

Das erfindungsgemäße Verfahren ist mit zahlreichen Vorteilen und Besonderheiten verbunden, welche nachfolgend geschildert sind:
Vor dem Hintergrund, dass es sich bei dem erfindungsgemäßen Verfahren um ein biologisches Verfahren zur Reinigung von Wasser, insbesondere zu Zwecken der Nitratelimination, handelt, ist das Verfahren insgesamt ressourcenschonend und benötigt wenig Energie, da die Umsetzung von Nitrat in elementaren Stickstoff durch Biomasse auf Basis von Mikroorganismen katalysiert wird. Insgesamt wird somit mit dem erfindungsgemäßen Verfahren eine umweltfreundliche, ressourcenschonende und kostengünstige Möglichkeit zur Reduzierung der Nitratstickstoffkonzentration in Wasser bereitgestellt.

Weiterhin ist das erfindungsgemäße Verfahren vielseitig einsetzbar, d. h. für diverse nitrathaltige Wässer geeignet. Im Rahmen der vorliegenden Erfindung kann mit dem erfindungsgemäßen Verfahren sowohl in Rohwässern, wie z. B. Grund-, Brunnen- oder Quellwasser, als auch in Abwässern der Nitratstickstoffgehalt signifikant reduziert werden. Insbesondere kann das erfindungsgemäße Verfahren auch als Vorstufe für die Trinkwasseraufbereitung eingesetzt werden, um einen Nitratgehalt im Wasser von weniger als 50 mg/l, d.h. einen Nitratgehalt unterhalb des für Trinkwasser zulässigen maximalen Nitratgehalts, zu erreichen.

Zudem wurde im Rahmen der vorliegenden Erfindung überraschend gefunden, dass das schnelle Wachstum von heterotrophen Mikroorganismen und die damit verbundene Überschussschlammproduktion unterdrückt werden kann, wenn die biologische Stickstoffelimination als lithotrophe Nitratelimination durchgeführt wird. In diesem Zusammenhang hat es sich als vorteilhaft erwiesen, die im zu behandelnden Wasser enthaltene Konzentration an organischen Kohlenstoffverbindungen, gemessen am biochemischen Sauerstoffbedarf BSB₅ sowie am chemischen Sauerstoffbedarf CSB, d. h. die Menge aller im Wasser vorhandener, unter bestimmten Bedingungen oxidierbarer organischer Stoffe, niedrig zu halten oder als niedrig konzentriert vorauszusetzen. Erfindungsgemäß kann es insbesondere vorgesehen sein, dass das zu behandelnde Wasser anorganische oxidierbare Stoffe enthält, die Konzentration an organischen oxidierbaren Stoffen allerdings niedrig gehalten oder als niedrig konzentriert vorausgesetzt wird.

Vor diesem Hintergrund eignet sich das erfindungsgemäße biologische Verfahren im Besonderen für die Nitratelimination aus Roh- und/oder Abwässern, welche einen geringen BSB₅ oder CSB aufweisen, wie z.B. Brunnen- oder Grundwasser oder insbesondere industrielle Abwässer, welche frei von fäkalen oder anderweitigen organischen Verunreinigungen sind. Die biologische Aufbereitung von Wasser mit geringem CSB bzw. geringem BSB₅ war bislang aus prozessökonomischer Sicht wenig sinnvoll, da für die bekannten heterotrophen Nitrateliminationsverfahren die Zugabe von Kohlenstoffquellen, z.B. in Form von Methanol, notwendig war. Im Rahmen der vorliegenden Erfindung wurde vollkommen überraschend gefunden, dass die erfindungsgemäße Verfahrensführung die biologische Behandlung dieser Wässer auch ohne die Zugabe externer Kohlenstoffquellen ermöglicht.

Weiterhin zeichnet sich das erfindungsgemäße Verfahren durch eine gute Nitratabbauleistung aus. Mit dem erfindungsgemäßen Verfahren kann auch in stark nitratbelasteten Wässern die Nitratkonzentration auf Werte unterhalb des in der "Verordnung über die Qualität von Wasser für den menschlichen Gebrauch" (Trinkwasserverordnung) für Trinkwasser festgelegten Grenzwerts von maximal 50 mg/l Nitrat reduziert werden. Mit anderen Worten ist es mit dem erfindungsgemäßen Verfahren sogar möglich, nitrathaltige Wässer in Bezug auf den Nitratgehalt so aufzubereiten, dass Trinkwasserqualität erreicht wird.

Im Übrigen hat sich im Rahmen der vorliegenden Erfindung gezeigt, dass die mit dem erfindungsgemäßen Verfahren erzielten Nitratabbauraten sowie die Gesamtstickstoffabbauraten über eine zielgerichtete Einstellung der Verfahrensparameter noch weiterführend verbessert werden können, insbesondere auf Basis der zielgerichteten Einstellung der Verweilzeit des nitrathaltigen Wassers im Biomasse- bzw. Schlammbett, der Gelöstsauerstoffkonzentration und des pH-Werts sowie der Bettbelastung, d. h. der Nitratmenge, mit welcher ein definiertes Volumen der Biomasse pro Tag belastet wird.

In Bezug auf die Vorteile und Besonderheiten des erfindungsgemäßen Verfahrens, insbesondere die mit dem Verfahren erzielten Nitratabbauraten, wird bereits an dieser Stelle auf die nachfolgend noch im Detail geschilderten Ausführungsbeispiele verwiesen, welche die Vorteile und Wirksamkeit des erfindungsgemäßen Verfahrens weiterführend belegen. Die Vorteile und Besonderheiten sind als Indiz für das Vorliegen einer erfinderischen Tätigkeit zu werten.

Zum besseren Verständnis der vorliegenden Erfindung werden nachfolgend die wichtigsten Begrifflichkeiten in Bezug auf das erfindungsgemäße Verfahren erläutert:
Was den Begriff "Biomasse" anbelangt, wird dieser im Zusammenhang mit dem erfindungsgemäßen Verfahren zur Bezeichnung einer Zellmasse auf Basis von Mikroorganismen verwendet. Bei den Mikroorganismen handelt es sich vorwiegend um Bakterien und Archaeen. Unter Umständen können allerdings auch Pilze, Algen oder sonstige Mikroorganismen in der Biomasse enthalten sein. Die Biomasse bildet im Rahmen des erfindungsgemäßen Verfahrens im Reaktionsraum ein Schlamm- bzw. Biomassebett aus, welches mit dem nitrathaltigen Wasser in Kontakt steht, insbesondere von diesem umströmt wird. Gemäß einer besonders bevorzugten Ausführungsform wird für das erfindungsgemäße Verfahren ein Biomasse- bzw. Schlammbett auf Basis von Biomasse in Form von Pellets und/oder Granulaten eingesetzt. Für weiterführende Informationen in Bezug auf Biomasse in Form von Pellets und/oder Granulaten kann auf die nachfolgenden Ausführungen und die im weiteren Verlauf noch geschilderten Ausführungsbeispiele verwiesen werden.

Unter dem Begriff "Nitratelimination" wird im Rahmen der vorliegenden Erfindung die vorzugsweise mikrobielle Umwandlung des in Form von Nitrat gebundenen Stickstoffs zu molekularem Stickstoff bzw. Stickstoffgas und Stickoxiden unter lithotrophen Bedingungen, d.h. unter Nutzung anorganischer Verbindungen bzw. Stoffe zur Energiegewinnung, durch ein Konsortium verschiedener Mikroorganismen verstanden. Die für die Nitratelimination eingesetzten Mikroorganismen sind am Schwefel-, Methan-, Stickstoff- und Eisenkreislauf beteiligt. Dabei kann - ohne sich hierbei auf diese Theorie beschränken zu wollen - der molekulare Stickstoff als direktes Stoffwechselprodukt aus der mikrobiellen Verstoffwechselung von Nitrat hervorgehen oder aber als indirektes Reaktionsprodukt durch chemische Umsetzung des Nitrats mit mikrobiellen Stoffwechselprodukten entstehen.

"Stickstoffkreislauf" meint im Zusammenhang mit dem erfindungsgemäßen Verfahren den Kreislauf des Elements Stickstoff in der Biosphäre. Die Schritte des Stickstoffkreislaufs sind die Stickstofffixierung (Umwandlung von chemisch inertem N₂ in bioverfügbares Ammonium, vorzugsweise durch Mikroorganismen), die Nitrifikation (mikrobielle Umsetzung von Ammoniak zu Nitrat), die Stickstoffassimilation (Aufbau von organischen Stickstoffverbindungen aus anorganischen Stickstoffverbindungen), die Ammonifikation (Umwandlung von organischen Stickstoffverbindungen in Ammoniak bzw. Ammonium), die Nitratreduktion (Reduktion von Nitrat zu Nitrit), die Denitrifikation (Reduktion von Nitrat und Nitrit zu molekularem Stickstoff) und die Anaerobe Ammonium-Oxidation bzw. den sogenannten Anammox-Prozess (Reaktion von Ammonium und Nitrit zu molekularem Stickstoff).

Für das erfindungsgemäße Verfahren spielt - ohne sich hierbei auf diese Theorie beschränken zu wollen - insbesondere die Denitrifikation eine Rolle. Die Denitrifikation wird durch verschiedene Mikroorganismen katalysiert, welche als Denitrifizierer bezeichnet werden. Die im Rahmen des erfindungsgemäßen Verfahrens eingesetzten bzw. in der Biomasse enthaltenen am Stickstoffkreislauf beteiligten Mikroorganismen werden vorzugsweise unter anaeroben und lithotrophen Milieubedingungen angesiedelt bzw. sind unter anaeroben und lithotrophen Milieubedingungen lebensfähig.

Der Begriff "lithotroph" ist im Rahmen der vorliegenden Erfindung so zu verstehen, dass die erfindungsgemäß eingesetzten Mikroorganismen für ihren Anabolismus und/oder zur Biosynthese, insbesondere zur Energiegewinnung, anorganische Reduktionsmittel bzw. Elektronendonatoren nutzen.

Weiterhin enthält die für das erfindungsgemäße Verfahren eingesetzte Biomasse bzw. im Reaktionsraum gebildete und/oder angesiedelte Biozönose Mikroorganismen, insbesondere Bakterien und/oder Archaeen, welche am Schwefelkreislauf, d.h. dem System der chemischen Umwandlungen von Schwefel und schwefelhaltigen Verbindungen, beteiligt sind. Die am Schwefelkreislauf beteiligten Mikroorganismen können beispielsweise zu den schwefelreduzierenden bzw. schwefeloxidierenden Bakterien gehören und den Gattungen *Syntrophobacter, Thiobacillus, Desulfovibrio* und/oder *Sulfuritalea* angehören. Im Rahmen der vorliegenden Erfindung kann es in diesem Zusammenhang insbesondere vorgesehen sein, die Milieubedingungen derart einzustellen, dass sich am Schwefelkreislauf beteiligte Mikroorganismen in dem Reaktionsraum, insbesondere dem nitrathaltigen Wasser, ansiedeln und anaeroben, lithotrophen Stoffwechsel betreiben können.

Unter am Eisenkreislauf beteiligten Mikroorganismen werden im Rahmen der vorliegenden Erfindung zum einen eisenoxidierende Mikroorganismen, synonym auch als Eisenbakterien bezeichnet, verstanden, welche Energie durch Oxidation von zweiwertigem Eisen (Fe(II)) gewinnen und einen anaeroben oder fakultativ anaeroben Stoffwechsel betreiben. Eisenoxidierende Mikroorganismen können beispielsweise den Gattungen *Thiobacillus* und/oder *Acidovorax* angehören. Gleichermaßen werden im Rahmen der vorliegenden Erfindung unter den am Eisenkreislauf beteiligten Mikroorganismen auch eisenreduzierende Bakterien verstanden, die dreiwertiges Eisen (Fe(III)) zu zweiwertigem Eisen (Fe(II)) reduzieren. Eisenreduzierende Mikroorganismen können beispielsweise den Gattungen *Geobacter, Thauera* und/oder *Rhodoferax* angehören.

Im Übrigen enthält die für das erfindungsgemäße Verfahren eingesetzte Biomasse Mikroorganismen, insbesondere Bakterien und/oder Archaeen, welche am Methankreislauf beteiligt sind. Zu den am Methankreislauf beteiligten Mikroorganismen gehören unter anderem Methanbildner bzw. Methanogene, bei deren Energiestoffwechsel Methan gebildet wird (synonym auch als Methanogenese bezeichnet). Methanbildner bzw. Methanogene können insbesondere den Gattungen *Methanosaeta, Methanobacterium, Methanoregula, Methanosarcina, Methanosphaerula* und/oder *Methanospirillum* angehören.

Gemäß einer besonders bevorzugten Ausführungsform weist die im Rahmen des erfindungsgemäßen Verfahrens eingesetzte Biomasse Mikroorganismen der Gattungen *Methanosaeta, Methanobacterium, Syntrophobacter, Acidovorax, Methanoregula, Anaerolinea, Thiobacillus, Methanosarcina, Geobacter, Methanoculleus, Desulfovibrio, Sulfuritalea, Thauera, Methanosphaerula, Azoarcus, Methanothermobacter, Pseudomonas, Stenotrophomonas, Lysobacter, Pseudoxanthomonas, Methanospirillum und*/*oder Rhodoferax,* wobei die vorgenannte Auflistung nicht abschließend zu verstehen ist.

Es ist vorgesehen, dass als Biomasse für das erfindungsgemäße Verfahren Belebtschlamm, unter anaeroben und heterotrophen Bedingungen kultivierter, d.h. aufgezogener, Belebtschlamm, eingesetzt wird. Unter anaeroben Bedingungen kultivierter bzw. aufgezogener Belebtschlamm enthält üblicherweise ein vielfältiges Konsortium an Mikroorganismen; unter anderem Mikroorganismen, die am Stickstoff-, Schwefel-, Methan- und Eisenkreislauf beteiligt sind. Für die vorliegende Erfindung geeignete Biomasse bzw. geeigneter Belebtschlamm wird aus einem heterotrophen, anaeroben Belebtschlammverfahren zur Behandlung von stark CSB-haltigen bzw. CSB-belasteten Abwässern gewonnen. In diesem Zusammenhang war es vollkommen überraschend, dass ursprünglich heterotroph kultivierter bzw. aufgezogener Belebtschlamm zur biologischen Nitratelimination aus Roh- und Abwässern unter lithotrophen Milieubedingungen geeignet ist bzw. die unter lithotrophen Bedingungen ablaufenden mikrobiellen Stoffwechselprozesse der am Stickstoff-, Eisen-, Schwefel- und Methan-Kreislauf beteiligten Mikroorganismen zu einem Nitratabbau in nitrathaltigem Wasser, insbesondere Roh- und/oder Abwasser, führen.

Um Milieubedingungen einzustellen, die eine lithotrophe Nitratelimination durch am Stickstoff-, Methan-, Eisen- und Schwefelkreislauf beteiligte Mikroorganismen ermöglichen, ist vorgesehen, dass das Verfahren und/oder die Nitratelimination unter anoxischen Bedingungen durchgeführt wird. Gleichermaßen ist es bevorzugt, wenn das nitrathaltige Wasser während des Verfahrens und/oder der Nitratelimination auf sauerstoffarme, insbesondere anoxische Bedingungen eingestellt wird. Besonders vorteilhaft ist es im Hinblick auf die vorliegende Erfindung, wenn das Verfahren und/oder die Nitratelimination bei einer Konzentration an gelöstem Sauerstoff von höchstens 3 mg/l, insbesondere höchstens 2 mg/l, vorzugsweise höchstens 1 mg/l, bezogen auf das Wasser, durchgeführt wird.

Um die Verfahrenseffizienz - sowohl im Hinblick auf die Vermeidung der Produktion von Überschussschlamm durch die Ansiedelung heterotropher Mikroorganismen bzw. Umstellung des Stoffwechsels der Mikroorganismen auf heterotrophe Bedingungen als auch auf eine Kostenreduzierung - zu verbessern, ist es zudem bevorzugt, wenn das erfindungsgemäße Verfahren und/oder die Nitratelimination ohne Zufuhr von organischen Kohlenstoffquellen durchgeführt wird.

Wie zuvor bereits ausgeführt, ist das erfindungsgemäße Verfahren für eine Nitratentfernung bzw. Reduzierung des Nitratgehalts in verschiedenartigen Wässern geeignet. Gemäß einer bevorzugten Ausführungsform des erfindungsgemäßen Verfahrens kann es vorgesehen sein, dass als nitrathaltiges Wasser Rohwasser und/ oder Abwasser, insbesondere Rohwasser, eingesetzt wird.

Unter dem Begriff "Rohwasser" wird im Rahmen der vorliegenden Erfindung jedwedes unbehandelte Wasser, welches Oberflächenquellen, wie beispielweise Teichen, Talsperren, Seen oder Flüssen, oder aber unter der Oberfläche liegenden Wasserquellen, wie Brunnen oder Grundwasser, entstammt, verstanden.

Unter dem Begriff "Abwasser" werden im Rahmen der vorliegenden Erfindung durch häuslichen, gewerblichen, landwirtschaftlichen oder sonstigen Gebrauch in ihren Eigenschaften veränderte Wässer bzw. Schmutzwässer sowie die von Niederschlägen aus dem Bereich von bebauten oder befestigten Flächen abfließenden und zum Fortleiten gesammelten Wässer bzw. Niederschlagswässer sowie sonstige zusammen mit Schmutzwässern oder Niederschlagswässern in Abwasseranlagen abfließende Wässer verstanden. Hinsichtlich einer Nitratelimination aus Abwässern eignet sich das erfindungsgemäße Verfahren in besonderem Maße zur Aufreinigung von Abwässern, welche lediglich in geringem Umfang mit organischen Substanzen verschmutzt sind bzw. Abwässern, welche vor Durchführung des erfindungsgemäßen Verfahrens von organischen Bestandteilen zumindest im Wesentlichen befreit wurden. Besonders gut geeignet ist das erfindungsgemäße Verfahren beispielsweise zur Entfernung von Nitrat aus Abwasser, welches bei der Aufbereitung von Rohwasser zu Trinkwasser angefallen ist.

Was die Eigenschaften des nitrathaltigen Wassers weiterhin anbelangt, ist es erfindungsgemäß bevorzugt, wenn das nitrathaltige Wasser zum Zeitpunkt der Zuführung in den Reaktor einen verhältnismäßig geringen chemischen Sauerstoffbedarf (CSB) aufweist. Unter dem chemischen Sauerstoffbedarf bzw. CSB wird im Rahmen der vorliegenden Erfindung ein Maß für die Summe aller im nitrathaltigen Wasser vorhandenen oxidierbaren Stoffe verstanden. Der CSB gibt somit die Menge an Sauerstoff an (Einheit: mg/l), die zur Oxidation der im nitrathaltigen Wasser vorhandenen oxidierbaren Stoffe benötigt würde, wenn Sauerstoff das Oxidationsmittel wäre. Der chemische Sauerstoffbedarf dient insbesondere als Summenparameter zur Quantifizierung der Belastung von Abwasser mit organischen Stoffen und umfasst sowohl biologisch abbaubare als auch biologisch nicht abbaubare organische Stoffe sowie anorganische Stoffe. Der chemische Sauerstoffbedarf kann beispielsweise durch eine photometrische Messmethode gemäß DIN 15705 oder eine maßanalytische Messmethode gemäß DIN 38409-H41 bestimmt werden.

Erfindungsgemäß weist das nitrathaltige Wasser einen chemischen Sauerstoffbedarf CSB [mg O₂/l] im Bereich von 0 bis 50 mg/l bevorzugt 0 bis 25 mg/l, besonders bevorzugt 0 bis 10 mg/l, bezogen auf das nitrathaltige Wasser zum Zeitpunkt der Zuführung in den Reaktionsraum, auf.

Der Einsatz von nitrathaltigem Wasser mit einem geringen CSB bzw. einer CSB-Konzentration in den vorgenannten Bereichen beugt einer Umstellung der Mikroorganismen auf heterotrophes Wachstum bzw. heterotrophen Stoffwechsel und einer Ansiedlung heterotroph wachsender Mikroorganismen im Reaktionsraum vor. Mit anderen Worten wird durch den Einsatz von nitrathaltigem Wasser mit einem CSB im vorgenannten Bereich sichergestellt, dass Prozess- bzw. Milieubedingungen für eine lithotrophe Nitratelimination geschaffen und darüber hinaus auch erhalten werden. In diesem Zusammenhang kann es auch vorgesehen sein, dass dem erfindungsgemäßen Verfahren eine Behandlungsstufe zur Einstellung, insbesondere Senkung oder Verringerung, des CSB im nitrathaltigen Wasser vorgeschaltet ist.

Was das zu reinigende Rohwasser für das erfindungsgemäße Verfahren weiterhin anbelangt, so kann es vorgesehen sein, dass dieses einen definierten biochemischen Sauerstoffbedarf (BSB) aufweist. Bei dem biochemischen Sauerstoffbedarf handelt es sich um die Maßzahl für die Menge an im Wasser gelösten Sauerstoff, welcher zum mikrobiellen bzw. biologischen Abbau von gelösten organischen Verbindungen im Abwasser benötigt wird. In diesem Zusammenhang gibt der BSB₅ an, welche Menge an Sauerstoff (in mg/l) die Mikroorganismen in einer Wasserprobe im Zeitraum von fünf Tagen bei einer Temperatur von 20 °C verbrauchen würden, um die im Wasser enthaltenen Inhaltsstoffe aerob abzubauen.

Mit anderen Worten handelt es sich beim biochemischen Sauerstoffbedarf um ein indirektes Maß für die Summe aller biologisch abbaubaren organischen Stoffe im Wasser. Der biochemische Sauerstoffbedarf gibt dabei an, wie viel gelöster Sauerstoff in einer bestimmten Zeit für den biologischen Abbau der organischen Abwasserinhaltsstoffe bzw. Rohwasserinhaltsstoffe benötigt wird. Die Bestimmung des BSB₅ kann insbesondere manometrisch oder respiratorisch erfolgen. Darüber hinaus ist eine Bestimmung mittels Verdünnungsmethode gemäß DIN EN 1899-1 möglich.

Besonders gute Ergebnisse bzw. Nitratabbauleistungen werden erfindungsgemäß erzielt, wenn das nitrathaltige Wasser einen biologischen Sauerstoffbedarf BSB₅ im Bereich von 0 bis 75 mg/l, insbesondere höchstens 50 mg/l, vorzugsweise höchstens 40 mg/l, bevorzugt höchstens 30 mg/l, besonders bevorzugt höchstens 20 mg/l, bezogen auf das nitrathaltige Wasser zum Zeitpunkt der Zuführung in den Reaktionsraum, aufweist. Mit anderen Worten ist es erfindungsgemäß bevorzugt, wenn der BSB₅ des nitrathaltigen Wassers möglichst niedrig ist.

Die Nitratkonzentration in dem nitrathaltigen Wasser zum Zeitpunkt der Zuführung in den Reaktionsraum kann in weiten Bereichen variieren. Gemäß der Erfindung ist es vorgesehen, dass das nitrathaltige Wasser eine Nitratkonzentration im Bereich von 5 bis 500 mg/l, bevorzugt 8 bis 250 mg/l, am meisten bevorzugt 10 bis 100 mg/l, bezogen auf das nitrathaltige Wasser zum Zeitpunkt der Zuführung in den Reaktionsraum, aufweist. Wie aus den nachfolgend geschilderten Ausführungsbeispielen noch weiterführend hervorgeht, zeichnet sich das erfindungsgemäße Verfahren durch eine hervorragende Nitratabbauleistung bzw. Nitratabbaurate ab.

In diesem Zusammenhang kann es im Rahmen des erfindungsgemäßen Verfahrens vorgesehen sein, dass die Nitratkonzentration des nitrathaltigen Wassers im Zulauf in den Reaktionsraum gemessen wird.

Mit dem erfindungsgemäßen Verfahren wird eine signifikante Reduzierung des Nitratgehalts bzw. der Nitratkonzentration in dem behandelten nitrathaltigen Wasser erzielt. Erfindungsgemäß kann es insbesondere vorgesehen sein, dass das nitrathaltige Wasser zum Zeitpunkt des Verlassens des Reaktionsraums eine Nitratkonzentration im Bereich von 0,01 mg/l, insbesondere 0,1 mg/l, vorzugsweise 1 mg/l, bevorzugt 2 bis 200 mg/, bevorzugt 3 bis 100 mg/l, noch mehr bevorzugt 4 bis 50 mg/l, weiter bevorzugt 5 bis 10 mg/l, bezogen auf das nitrathaltige Wasser zum Zeitpunkt des Verlassens des Reaktionsraums, aufweist.

Wie auch aus den nachfolgend noch im Detail geschilderten Ausführungsbeispielen ersichtlich ist, können mit dem erfindungsgemäßen Verfahren teilweise Nitratabbauraten und/oder Gesamtstickstoffabbauraten von circa 90 %, bezogen auf den Nitrat- bzw. Gesamtstickstoffgehalt des nitrathaltigen Wassers zum Zeitpunkt der Zuführung in den Reaktionsraum, erzielt werden.

Zudem kann es erfindungsgemäß zudem vorgesehen sein, im Rahmen des erfindungsgemäßen Verfahrens weitere Parameter, wie die Temperatur, die Zusammensetzung des nitrathaltigen Wassers, die Aufenthaltszeit des nitrathaltigen Wassers im Reaktor, den pH-Wert und die nachfolgend noch spezifizierte Grenzschichterneuerung der Biomasse anzupassen und damit auch die adaptierte Biomasse bzw. Biozönose anzupassen bzw. auf die vorgenannten Parameter abzustimmen.

Was die im Rahmen des erfindungsgemäßen Verfahrens eingesetzte Biomasse weiterhin anbelangt, so ist es gemäß einer besonders bevorzugten Ausführungsform vorgesehen, wenn die Biomasse auf einem Trägermaterial einen Biofilm ausbildet. Dabei kann es insbesondere vorgesehen sein, dass das Trägermaterial eine Art Matrix bzw. ein Gerüst ausbildet, auf welchem die Biomasse, insbesondere die Mikroorganismen, sessil aufwächst bzw. aufwachsen. Das Aufwachsen der Biomasse auf dem Trägermaterial ist mit Vorteilen verbunden. Zum einen erlaubt die Biofilmbildung auf einem Trägermaterial eine leichtere Abscheidung der Biomasse vom nitrathaltigen Wasser. Zum anderen werden durch das Aufwachsen auf dem Trägermaterial gute Milieu- und Wachstumsbedingungen für die an der Nitratelimination beteiligten Mikroorganismen geschaffen.

Was das Trägermaterial im Speziellen anbelangt, kann es gemäß einer bevorzugten Ausführungsform der vorliegenden Erfindung vorgesehen sein, dass das Trägermaterial (i) anorganische und/oder organische, vorzugsweise anorganische Salze, insbesondere Carbonate, besonders bevorzugt Calciumcarbonat (Kalk); (ii) Metalle und/oder Übergangsmetalle, insbesondere Eisen; und/oder (iii) Nicht-Metalle, insbesondere Schwefel und/oder Stickstoff; enthält. In dem Trägermaterial auf Basis der vorgenannten Substanzen bildet das Calciumcarbonat bzw. der Kalk eine Art Gerüst oder Matrix aus, auf welchem bzw. welcher die Biomasse aufwächst. Das Trägermaterial wird von den an der Nitratelimination beteiligten Mikroorganismen selbst gebildet, insbesondere wenn diese unter anaeroben, reduzierenden Bedingungen kultiviert werden.

Im Übrigen ist es bevorzugt, wenn das Trägermaterial Metalle bzw. Übergangsmetalle, insbesondere Eisen, sowie Nicht-Metalle, insbesondere Schwefel und/oder Stickstoff, enthält. Die übrigen Inhaltsstoffe, insbesondere Eisen, Schwefel bzw. Stickstoff, tragen - ohne sich hierbei auf diese Theorie beschränken zu wollen - zu den reduzierenden Reaktionsbedingungen in dem nitrathaltigen Wasser bei und unterstützen so die Nitratelimination. Insbesondere können die Metalle, Übergangsmetalle und Nichtmetalle von den in der Biomasse enthaltenen Mikroorganismen als Elektronenakzeptoren und/oder Elektronendonatoren genutzt werden und somit der Energiegewinnung bzw. der Aufrechterhaltung des mikrobiellen lithotrophen Stoffwechsels dienen. Durch die Einstellung und Aufrechterhaltung reduzierender Bedingungen im nitrathaltigen Wasser wird insgesamt die Aufrechterhaltung der Biozönose und damit auch die Reduktion von Nitrat zu elementarem Stickstoff weiterführend gefördert.

Gemäß einer besonders bevorzugten Ausführungsform des erfindungsgemäßen Verfahrens kann es zudem vorgesehen sein, dass Biomasse in Form von Granulaten und/oder Pellets (granulierter Schlamm bzw. Pelletschlamm) eingesetzt wird. Wie nachfolgend noch im Detail ausgeführt, kann Biomasse in Form von Granulaten bzw. Pellets in dem nitrathaltigen Wasser besonders effizient dispergiert bzw. fluidisiert werden, so dass der konstante Stoffaustausch zwischen dem nitrathaltigen Wasser und der Biomasse unterstützt und aufrechterhalten wird. Die Verbesserung des Stoffaustauschs kommt wiederum der Nitrat- bzw. Gesamtstickstoffabbaurate zugute.

Bei den Granulaten bzw. Pellets handelt es sich vorzugsweise um Aggregationen der eingesetzten Biomasse, welche durch Calciumcarbonat-Gerüste als Trägermaterial, d.h. das zuvor beschriebene Trägermaterial, stabilisiert werden und im Übrigen Metalle bzw. Übergangsmetalle und Nicht-Metalle, vorzugsweise Eisen, Schwefel und/oder Stickstoff, enthalten.

Was die Granulate bzw. Pellets weiterhin anbelangt, so kann es erfindungsgemäß vorgesehen sein, dass diese zudem eine durchschnittliche Partikelgröße, insbesondere einen durchschnittlichen Teilchendurchmesser, im Bereich von 0,01 bis 150 mm, insbesondere 0,05 bis 100 mm, vorzugsweise 0,1 bis 50 mm, bevorzugt 1 bis 25 mm, besonders bevorzugt 2 bis 20 mm, weiter bevorzugt 3 bis 15 mm, noch mehr bevorzugt 5 bis 10 mm, aufweisen. Die Partikelgröße der Granulate bzw. Pellets kann mit Hilfe dem Fachmann grundsätzlich bekannter Verfahren, insbesondere lichtmikroskopisch, bestimmt werden. Die vorgenannten Partikelgrößen sind mit dem Vorteil verbunden, dass einerseits eine gute Fluidisierung der Biomasse im Reaktionsraum bzw. nitrathaltigen Wasser möglich ist und andererseits die Biomasse aufgrund des Volumen-/Oberfläche-Verhältnisses gut zugänglich für das nitrathaltige Wasser bleibt.

Pellets bzw. Granulate mit einem kalk-, eisen-, stickstoff- und schwefelhaltigen Trägermaterial, welche für das erfindungsgemäße Verfahren geeignet sind, können beispielsweise aus einer biologischen Behandlungsstufe für hochbelastete CSB-haltige Abwässer gewonnen werden. Der Biofilm auf den Trägermaterialien weist dabei ein Konsortium an Mikroorganismen auf, die am Stickstoff-, Methan-, Eisen- und Schwefelkreislauf beteiligt sind. Hinsichtlich weiterführender Informationen in Bezug auf die Gewinnung bzw. Bereitstellung einer geeigneten Biomasse für das erfindungsgemäße Verfahren kann auch auf die nachfolgend noch im Detail geschilderten Ausführungsbeispiele verwiesen werden.

Im Rahmen der vorliegenden Erfindung hat es sich zudem als vorteilhaft erwiesen, wenn die Biomasse, vorzugsweise die Biomasse in Form von Granulaten und/oder Pellets, in dem nitrathaltigen Wasser fluidisiert und/oder dispergiert wird. Auf Basis der Fluidisierung bzw. Dispergierung der Biomasse in dem nitrathaltigen Wasser wird der Stoffaustausch zwischen Biomasse und nitrathaltigem Wasser gewährleistet. Dabei wird insbesondere verhindert, dass sich die Biomasse auf dem Grund des Reaktionsraums absetzt bzw. verdichtet und so für die zur Nitratreduktion erforderlichen Stoffwechselvorgänge bzw. chemischen Reaktionen unzugänglich wird.

Die Nitratabbauraten bzw. -leistungen des erfindungsgemäßen Verfahrens können zudem noch weiterführend verbessert werden, wenn das Verfahren und/oder die Nitratelimination mit einer Bettbelastung [Stickstoffmenge pro Volumen Biomasse pro Zeiteinheit] im Bereich von 0,5 bis 1.000 gN/m³/d, insbesondere 1 bis 500 gN/m³/d, vorzugsweise 5 bis 250 gN/m³/d, bevorzugt 10 bis 100 gN/m³/d, besonders bevorzugt 30 bis 65 gN/m³/d, durchgeführt wird. Wie in den nachfolgenden Ausführungsbeispielen noch dargelegt, kann die Nitratabbaurate durch eine zielgerichtete Einstellung der Bettbelastung signifikant beeinflusst, insbesondere gefördert, werden.

Unter der Bettbelastung wird im Rahmen der vorliegenden Erfindung die Gesamtstickstoffmenge (Einheit: g) verstanden, mit der im erfindungsgemäßen Verfahren ein definiertes Volumen der Biomasse (Einheit: m³) im Reaktionsraum, d.h. das "Biomassebett" oder "Schlammbett" im Reaktionsraum, pro Zeiteinheit (Einheit: d bzw. Tag) belastet wird. Unter Berücksichtigung bzw. Hinzuziehung der Bettbelastung lässt sich das erfindungsgemäße Verfahren auf alle Arten von Reaktionsräumen übertragen, da sich die in den Reaktionsraum pro Zeiteinheit eingebrachte Stickstoffmenge unabhängig von der Art, Größe oder des Volumens des Reaktionsraums auf das Volumen der Biomasse bezieht.

Das erfindungsgemäße Verfahren kann zudem in verschiedenen Arten von Reaktionsräumen durchgeführt werden. Grundsätzlich sind für das erfindungsgemäße Verfahren alle Bioreaktoren, Fermentationssysteme und Reaktionsbecken für eine biologische Wasserbehandlung zur Durchführung des erfindungsgemäßen Verfahrens geeignet. Gemäß einer ersten erfindungsgemäß bevorzugten Ausführungsform kann es somit vorgesehen sein, dass das nitrathaltige Wasser durch einen Reaktor, insbesondere einen Rührkesselreaktor, Festbettreaktor, Wirbelschichtreaktor, Rohrreaktor und/oder Membranbioreaktor, vorzugsweise einen Rührkesselreaktor, geleitet wird. Darüber hinaus kann es auch vorgesehen sein, dass das nitrathaltige Wasser durch ein vorzugsweise geschlossenes Reaktionsbecken geleitet wird. Hierbei kann es sich insbesondere um ein Klärbecken handeln, welches die Einstellung von anoxischen Reaktionsbedingungen erlaubt. Mit anderen Worten kann es erfindungsgemäß somit vorgesehen sein, dass der Reaktionsraum ausgewählt ist aus Reaktoren, insbesondere Rührkesselreaktoren, Festbettreaktoren, Wirbelschichtreaktoren, Rohrreaktoren und/oder Membranbioreaktoren, vorzugsweise Rührkesselreaktoren, und/oder vorzugsweise geschlossenen Reaktionsbecken.

Um eine konstante und effiziente Nitratabbauleistung bzw. Nitrat- und Gesamtstickstoffabbaurate zu gewährleisten, wird das Verfahren und/ oder die Nitratelimination unter kontinuierlicher Grenzschichterneuerung an der Oberfläche der Biomasse durchgeführt. Durch eine Grenzschichterneuerung wird der Stoffaustausch zwischen dem nitrathaltigen Wasser und der Biomasse gewährleistet bzw. aufrechterhalten.

Gemäß einer besonders bevorzugten Ausführungsform der vorliegenden Erfindung erfolgt die Grenzschichterneuerung durch die Erzeugung einer Strömung in dem nitrathaltigen Wasser und/oder der Biomasse. Insbesondere kann es in diesem Zusammenhang vorgesehen sein, dass in dem nitrathaltigen Wasser eine vom unteren zum oberen Ende des Reaktionsraums gerichtete Strömung des nitrathaltigen Wassers und/oder der Biomasse erzeugt wird.

Für das erfindungsgemäße Verfahren sind alle dem Fachmann bekannten technischen Mittel zur Einstellung und/oder Erzeugung einer Grenzschichterneuerung bzw. zur Bewegung der Biomasse einsetzbar und können in Abhängigkeit von Reaktionsraum bzw. Reaktionsbehälter ausgewählt und angepasst werden. Geeignete technische Mittel für die Grenzschichterneuerung und/oder für die Bewegung der Biomasse und Erzeugung der Strömung sind zum Beispiel Rührvorrichtungen bzw. Rührwellen, Pumpen oder Umwälzungsvorrichtungen. Dabei ist zwingend ein Einbringen von Luftsauerstoff auszuschließen.

Gemäß einer besonders bevorzugten Ausführungsform erfolgt die Grenzschichterneuerung im Rahmen des erfindungsgemäßen Verfahrens durch Rühren. In diesem Zusammenhang ist es besonders bevorzugt, wenn Rührgeschwindigkeiten im Bereich von 0,1 bis 50 Umdrehungen pro Minute, insbesondere 0,5 bis 25 Umdrehungen pro Minute, vorzugsweise 0,7 bis 20 Umdrehungen pro Minute, bevorzugt 1 bis 10 Umdrehungen pro Minute, besonders bevorzugt 1,2 bis 5 Umdrehungen pro Minute, noch mehr bevorzugt 1,5 bis 2 Umdrehungen pro Minute, eingesetzt werden. Auf Basis der vorgenannten Rührgeschwindigkeiten kann zum einen die Grenzschichterneuerung und Bewegung der Biomasse sichergestellt werden. Zum anderen wird gleichzeitig jedoch verhindert, dass die Biomasse, vorzugsweise in Form von Granulaten bzw. Pellets, durch zu starkes Rühren destabilisiert wird oder in Folge des Eintrags zu hoher Scherkräfte zerfällt.

Im Übrigen hat sich Rahmen der vorliegenden Erfindung gezeigt, dass der pH-Wert einen signifikanten Einfluss auf die Nitratabbaurate bzw. Gesamtstickstoffabbaurate hat. Gemäß der Erfindung wird das Verfahren und/oder die Nitratelimination bei einem pH-Wert im Bereich von 6 bis 8, vorzugsweise 7 bis 7,5, durchgeführt wird. Ein pH-Wert in den vorgenannten Bereichen verbessert die Milieubedingungen im nitrathaltigen Wasser für die eingesetzte Biomasse, insbesondere die eingesetzten Mikroorganismen.

Im Übrigen wird die Nitratabbaurate bzw. Gesamtstickstoffabbaurate auch durch die Verweilzeit des nitrathaltigen Wassers im Reaktionsraum, insbesondere dem Reaktionsbett auf Basis von Biomasse beeinflusst. **In** diesem Zusammenhang hat es sich als besonders vorteilhaft erwiesen, wenn das erfindungsgemäße Verfahren und/oder die Nitratelimination mit Verweilzeiten des nitrathaltigen Wassers im Reaktionsraum im Bereich von 0,5 bis 100 Stunden, insbesondere 1 bis 80 Stunden, vorzugsweise 2 bis 50 Stunden, bevorzugt 5 bis 25 Stunden, besonders bevorzugt 8 bis 22 Stunden, durchgeführt wird. In diesem Zusammenhang kann auch auf die nachfolgend geschilderten Ausführungsbeispiele verwiesen werden, welche zeigen, dass mit Verweilzeiten des nitrathaltigen Wassers in den vorgenannten Bereichen Nitratabbauraten von bis zu 80 %, bezogen auf den Nitratgehalt des nitrathaltigen Wassers vor dessen Zuführung in den Reaktionsraum, erzielt werden.

Was die Verfahrensführung weiterhin anbelangt, kann es im Rahmen der vorliegenden Erfindung zudem vorgesehen sein, dass das erfindungsgemäße Verfahren kontinuierlich und/oder diskontinuierlich, vorzugsweise kontinuierlich, durchgeführt wird. Eine kontinuierliche Verfahrensführung ist insbesondere im Hinblick auf die Verfahrensökonomie vorteilhaft. Zudem wird das Verfahren einstufig durchgeführt.

Zudem kann es erfindungsgemäß vorgesehen sein, dass dem Verfahren eine Nachklärung und/oder Fällung und/oder Flockung nachgeschaltet ist, insbesondere wobei die Nachklärung und/oder Fällung und/oder Flockung in dem gleichen oder einem separaten Reaktionsraum, vorzugsweise einem separaten Reaktionsraum durchgeführt wird.

Im Ergebnis wird im Rahmen der vorliegenden Erfindung ein leistungsfähiges, biologisches Verfahren zur Nitratelimination aus Wasser, insbesondere Roh- und/oder Abwasser, bereitgestellt, welches die Nachteile, welche bei aus dem Stand der Technik bekannten Verfahren auftreten, überwindet oder zumindest abschwächt. Insgesamt zeichnet sich das erfindungsgemäße Verfahren durch gute Nitrat- und Gesamtstickstoffabbauraten aus und ist dabei umwelt- und ressourcenschonend und darüber hinaus kostengünstig in der Umsetzung. Weiterhin wird das bei aus dem Stand der Technik bekannten biologischen Verfahren häufig auftretende Problem der Überschussschlammproduktion vermieden.

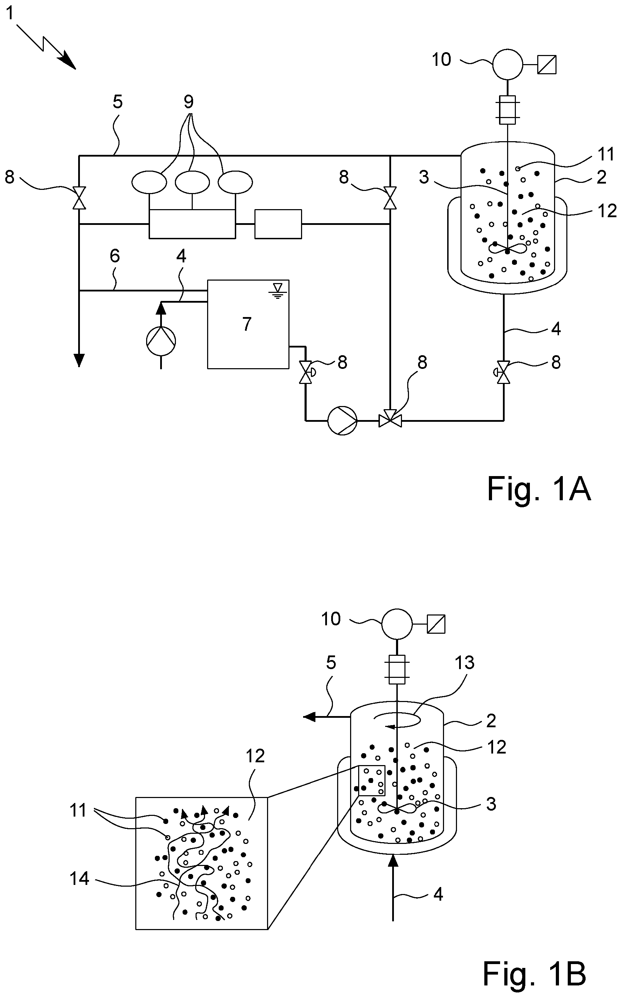

Weitere Einzelheiten und Vorteile des Erfindungsgegenstands ergeben sich aus der nachfolgenden Beschreibung und den zugehörigen Zeichnungen, in denen bevorzugte Ausführungsformen des erfindungsgemäßen Verfahrens anhand der schematischen Darstellung einer für das erfindungsgemäße Verfahren geeigneten Reaktoranlage dargestellt sind. Es zeigen
- Fig. 1A: eine schematische Darstellung einer zur Durchführung des erfindungsgemäßen Verfahrens geeigneten Reaktoranlage und
- Fig. 1B: eine schematische Darstellung der Innenansicht eines Reaktortanks während der Durchführung des erfindungsgemäßen Verfahrens, einschließlich einer Ausschnittvergrößerung, welche die in dem nitrathaltigen Wasser bzw. in der Biomasse erzeugte Strömung zur Gewährleistung einer Grenzschichterneuerung schematisch darstellt.

Fig. 1A zeigt schematisch eine Reaktoranlage 1, welche zur Durchführung des erfindungsgemäßen Verfahrens eingesetzt werden kann. Das Verfahren kann dabei sowohl im diskontinuierlich als Batch-Betrieb als auch kontinuierlich, vorzugsweise kontinuierlich, durchgeführt werden. Die Reaktoranlage 1 weist einen Reaktortank 2 mit einer Rührwelle 3 und einem Motor / Antrieb 10 für die Rührwelle 3 auf. Gemäß einer bevorzugten Ausführungsform des erfindungsgemäßen Verfahrens wird als Reaktortank 2 ein Rührkesselreaktor bzw. *Continuously Stirred Tank Reactor* (CSTR) eingesetzt. Der Reaktortank 2 wird mit der Biomasse 11, vorzugsweise Biomasse in Form von Granulaten und/oder Pellets, beschickt. Dabei bildet die Biomasse 11 in dem Reaktortank 2 ein Biomasse- bzw. Schlammbett aus. Für die Nitratelimination aus nitrathaltigem Wasser, insbesondere Roh- und/oder Abwasser, wird das nitrathaltige Wasser 12 dem Reaktionsraum, insbesondere dem Reaktortank 2, über einen Zulauf 4 zugeführt. Optional kann die für das erfindungsgemäße Verfahren eingesetzte Reaktoranlage 1 ein Zulaufgefäß bzw. eine Vorlage 7 für das nitrathaltige Wasser 12 aufweisen, aus welchem bzw. welcher das nitrathaltige Wasser über den Zulauf 4 dem Reaktionsraum, insbesondere dem Reaktortank 2, zugeführt wird. Im Übrigen ist es gemäß einer bevorzugten Ausführungsform des erfindungsgemäßen Verfahrens bevorzugt, wenn für das nitrathaltige Wasser 12 eine definierte Verweilzeit im Reaktortank 2 bzw. Biomassebett eingestellt wird. Gleichermaßen ist es bevorzugt, wenn das nitrathaltige Wasser 12 mit einer zielgerichtet eingestellten Bettbelastung dem Reaktortank 2 bzw. der Biomasse 11 zugeführt wird. Um die Bettbelastung einzustellen, kann es vorgesehen sein, dass die Gesamtstickstoff- und/oder Nitratkonzentration im nitrathaltigen Wasser 12 vor Zuführung in den Reaktortank 2, vorzugsweise im Zulauf 4 und/oder im Zulaufgefäß bzw. in der Vorlage 7, gemessen wird. Im Hinblick auf die erfindungsgemäße Verfahrensführung kann es zudem vorgesehen sein, dass die Biomasse 11 mit dem nitrathaltigen Wasser 12 fluidisiert und zu Zwecken der Grenzschichterneuerung bewegt wird. Vorzugsweise erfolgt dies durch Rühren mit der Rührwelle 3. Nach Ablauf der Verweilzeit des nitrathaltigen Wassers in dem Biomassebett bzw. dem Schlammbett verlässt das nitrathaltige Wasser 12 den Reaktortank 2 über den Ablauf 5. Der Zu- und Ablauf des nitrathaltigen Wassers vor bzw. nach Abschluss der Verweilzeit im Biomasse- bzw. Schlammbett kann über entsprechende Pumpen 15 und (Absperr-)Ventile 8 gesteuert werden.

Im Übrigen ist es möglich, über Messeinrichtungen 9 die Prozessparameter zu überwachen und einzustellen, insbesondere können mit den Messeinrichtungen 9 der pH-Wert des nitrathaltigen Wassers 12, die Temperatur, die Gelöstsauerstoffkonzentration, die Gesamtstickstoffkonzentration sowie die Nitrat- und/oder Ammoniumkonzentration gemessen werden. Gegebenenfalls kann in Abhängigkeit von den Messwerten Nitrat zugeführt werden, um den Nitratabbau anzuregen und/oder zu beschleunigen. Gleichermaßen können Anpassungen des pH-Werts vorgenommen werden.

Fig. 1B zeigt zudem die schematische Darstellung der Innenansicht eines Reaktortanks 2 auf Basis eines Rührkesselreaktors im Betriebszustand während des erfindungsgemäßen Verfahrens. Dabei bildet die Biomasse 11 ein Biomasse- bzw. Schlammbett im Reaktortank 2 aus und wird von dem nitrathaltigen Wasser 12 fluidisiert und/oder durchströmt. Um eine Grenzschichterneuerung zwischen Biomasse 11 und nitrathaltigem Wasser 12 zur Verbesserung der Nitratabbaurate zu gewährleisten, ist es - wie zuvor ausgeführt - vorgesehen, dass das erfindungsgemäße Verfahren unter Rühren durchgeführt wird. Die Rotation 13 der Rührwelle 3 ist in Fig. 1B angedeutet. Durch das Rühren wird kann in dem nitrathaltigen Wasser 12 bzw. der Biomasse 11 eine Strömung 14 erzeugt werden, wobei die Strömung vorzugsweise vom unteren Ende des Reaktors in Richtung des oberen Endes gerichtet ist.

Die anhand von Fig. 1A und 1B geschilderte erfindungsgemäße Verfahrensführung unter Einsatz der dargestellten Reaktoranlage dient zur verständlichen Erläuterung und Veranschaulichung des erfindungsgemäßen Verfahrens und soll in keiner Weise beschränkend wirken. Andersartige Reaktoren, wie zum Beispiel Festbettreaktoren, Wirbelschichtreaktoren, Rohrreaktoren bzw. Membranbioreaktoren, oder aber vorzugsweise geschlossene Reaktionsbecken sind zur Durchführung des erfindungsgemäßen Verfahrens gleichermaßen geeignet.

Bevorzugte Ausführungsformen der vorliegenden Erfindung werden nachfolgend zudem auf Basis der Ausführungsbeispiele geschildert, welche jedoch ebenfalls keinesfalls beschränkend zu verstehen sind.

### AUSFÜHRUNGSBEISPIELE:

Auf Basis der nachfolgend geschilderten Ausführungsbeispiele wurde die Effizienz des erfindungsgemäßen Verfahrens, insbesondere im Hinblick auf die Nitrat- und Gesamtstickstoffelimination, untersucht. Dabei wurde insbesondere der Einfluss verschiedener Prozess- und Milieuparameter, insbesondere der Aufenthaltszeit bzw. Verweilzeit des nitrathaltigen Wassers im Schlamm- bzw. Biomassebett, der Sauerstoffkonzentration, des pH-Werts und der Bettbelastung, auf die Nitrat- bzw. Gesamtstickstoffabbaurate analysiert.

### 1. Bereitstellung der Biomasse

Die zur Durchführung des erfindungsgemäßen Verfahrens eingesetzten Biomassepellets wurden aus einer biologischen Behandlungsstufe für hochbelastete CSB-haltige Abwässer gewonnen. In der biologischen Behandlungsstufe herrschten anaerobe, stark reduzierende Prozessbedingungen bei einer Temperatur von 36 °C. Unter diesen Bedingungen hatten sich Biomassepellets gebildet, welche am Stickstoff-, Methan-, Eisen- und Schwefelkreislauf beteiligte Mikroorganismen und ein kalk-, schwefel-, eisen- und stickstoffhaltiges Trägermaterial aufwiesen. Die Mikroorganismen bildeten dabei einen Biofilm auf dem Trägermaterial bzw. wuchsen auf dem Trägermaterial auf. Die Pellets wiesen eine mittlere Teilchengröße im Bereich von 5 bis 8 mm auf, wobei die Teilchengröße der Pellets lichtmikroskopisch bestimmt wurde. Zur Verwendung im erfindungsgemäßen Verfahren wurden die Biomassepellets von dem CSB-haltigen Abwasser abgeschieden bzw. der Abwasserbehandlungsstufe entnommen und in den Reaktionsraum zur Durchführung des erfindungsgemäßen Verfahrens überführt.

### 2. Reaktortechnik

Das erfindungsgemäße Verfahren wurde in einem einstufigen CSTR (*continuosly stirred tank reactor*) bzw. Rührkesselreaktor als kontinuierliches Verfahren durchgeführt, wobei der Reaktor mit einer Schüttung Biomasse auf Basis der oben beschriebenen granulierten Pellets und nitrathaltigem Wasser beschickt wurde. Das Verfahren wurde zu Zwecken der Grenzschichterneuerung unter Bewegung der Biomasse durch langsames Rühren mit weniger als zwei Umdrehungen pro Minute durchgeführt. Dadurch wurde der Reaktor mit dem nitrathaltigen Wasser von unten im Bereich des Zulaufs nach oben in Richtung Ablauf durchströmt. Auf dieser Basis wurde eine kontinuierliche Grenzschichterneuerung und Fluidisierung des durch die Biomasse gebildeten Schlamm- bzw. Biomassebetts ermöglicht, so dass der für den Nitratabbau erforderliche Stoffaustausch gewährleistet wurde. Gleichzeitig wurde jedoch durch die zweckgerichtet eingestellte Rührgeschwindigkeit einer mechanischen Zerstörung der granulierten Pellets mit der Biomasse vorgebeugt. Weitere Einzelheiten in Bezug auf die für die nachfolgend beschriebenen Versuche eingesetzte Reaktoranlage lassen sich auch Fig. 1A und 1B bzw. der obigen Figurenbeschreibung entnehmen.

### 3. Prozessparameter und Reaktionsbedingungen

Was die Prozessparameter anbelangt, wurde das erfindungsgemäße Verfahren bei einem pH-Wert im Bereich von 7 bis 7,5 und unter zumindest im Wesentlichen anoxischen Bedingungen, insbesondere einer Gelöstsauerstoffkonzentration im nitrathaltigen Wasser im Bereich von 0 bis 1 mg/l, bezogen auf das nitrathaltige Wasser, durchgeführt. Die Nitratkonzentration im nitrathaltigen Wasser im Zulauf betrug zwischen 10 und 188 mg/l; der CSB bzw. die CSB-Konzentration des nitrathaltigen Wassers im Zulauf betrug zwischen 5 bis 10 mg/l.

### 4. Untersuchung der Gesamtstickstoffabbaurate in verschiedenen nitrathaltigen Wässern

Eine allgemeine Analyse der Nitratabbauleistung des erfindungsgemäßen Verfahrens, gemessen an der Gesamtstickstoffabbaurate, wurde mit nitrathaltigen Wässern unterschiedlicher Herkunft vorgenommen. Hierzu wurde zum einen Abwasser aus der Trinkwasseraufbereitung und zum anderen Rohwasser auf Basis von Brunnenwasser eingesetzt. Angaben zu der Analytik der beiden eingesetzten Wässer können den nachfolgenden Tabellen 1 und 2 entnommen werden:

**Tab. 1: Analytik des einaesetzten Brunnenwassers**

| **Parameter** | **Prüfverfahren** | **mg/l** |
|---|---|---|
| Phosphat, ortho (PO4-P) | DIN EN ISO 15681 | < 0,005 |
| Bor | DIN 38405-D17 | 0,41 |
| Aluminium | DIN 38406-E9 | 0,02 |
| Ammonium | DIN 38406-E5 | 0,03 |
| **Nitrat** | **DIN 38405-D29** | **188,8** |
| Nitrit | DIN EN 26777 | 0,02 |
| Sulfat | DIN EN ISO 10304-1 | 462 |
| Chlorid | DIN EN ISO 10304-1 | 115 |
| Arsen | DIN EN ISO 11969 | 0,0041 |
| Blei | DIN 38406-E6 | < 0,01 |
| Cadmium | DIN EN ISO 5961 | < 0,001 |
| Calcium | DIN EN ISO 7980 | 309 |
| Chrom | DIN EN 1233 | < 0,01 |
| Eisen | DIN 38406-E1 | 0,02 |
| Kalium | DIN 38406-E13 | 14,3 |
| Kupfer | DIN 38406-E7 | < 0,01 |
| Magnesium | DIN EN ISO 7980 | 112 |
| Mangan | DIN 38406-E2 | < 0,06 |
| Nickel | DIN 38406-E11 | < 0,01 |
| Zink | DIN 38406-E8 | 0,61 |

**Tab. 2: Analytik des Abwassers aus der Trinkwasseraufbereitung**

| Parameter | Prüfverfahren | mg/l |
|---|---|---|
| Phosphat, ortho (PO4-P) | DIN EN ISO 15681 | 0,010 |
| TOC | DIN EN 1484 | 10,2 |
| Bor | DIN 38405-D17 | 0,05 |
| Aluminium | DIN 38406-E9 | 0,04 |
| Ammonium | DIN 38406-E5 | 0,06 |
| **Nitrat** | **DIN 38405-D29** | **100,0** |
| Nitrit | DIN EN 26777 | 0,03 |
| Sulfat | DIN EN ISO 10304-1 | 354 |
| Chlorid | DIN EN ISO 10304-1 | 2217 |
| Arsen | DIN EN ISO 11969 | 0,0029 |
| Blei | DIN 38406-E6 | < 0,01 |
| Cadmium | DIN EN ISO 5961 | < 0,001 |
| Calcium | DIN EN ISO 7980 | 353 |
| Chrom | DIN EN 1233 | < 0,01 |
| Eisen | DIN 38406-E1 | < 0,01 |
| Kalium | DIN 38406-E13 | 4,15 |
| Kupfer | DIN 38406-E7 | < 0,01 |
| Magnesium | DIN EN ISO 7980 | 131 |
| Mangan | DIN 38406-E2 | 0,12 |
| Natrium (W) | DIN 38406-E14 | 30,2 |

Neben den beiden vorgenannten Wässern wurde das erfindungsgemäße Verfahren zudem mit einem künstlich hergestellten Abwasser durchgeführt.

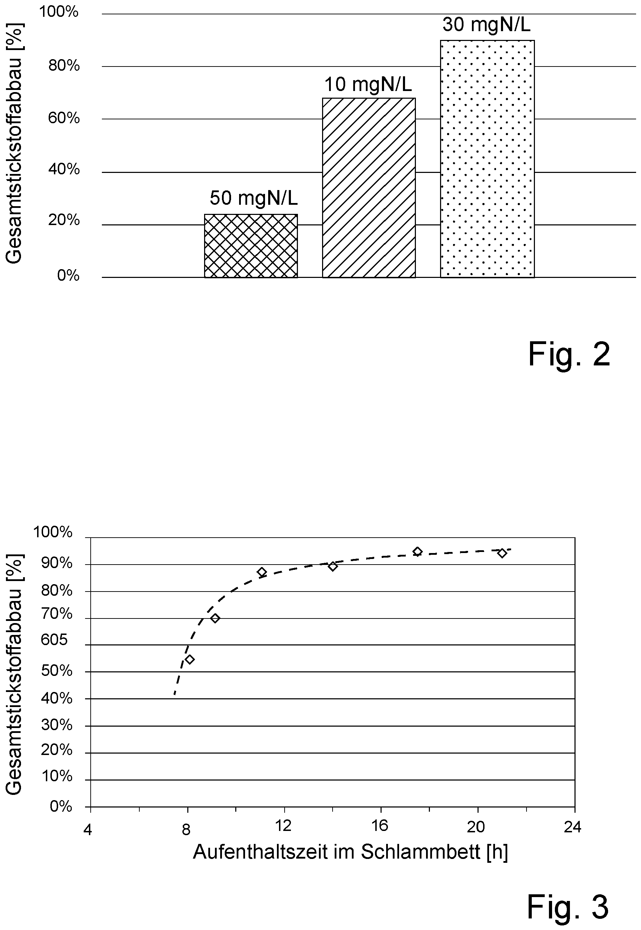

Im Rahmen der für die Untersuchung der Nitratabbaurate eingesetzten Verfahrensführung wurden die Konzentration an Nitratstickstoff bzw. der Nitratgehalt sowie der Gesamtstickstoffgehalt in dem nitrathaltigen Wasser zum Zeitpunkt des Zulaufs gemessen. Um die Stickstoff- und Nitratelimination zu analysieren, wurde der Gesamtstickstoffgehalt in dem behandelten Wasser zudem nach Abschluss des erfindungsgemäßen Verfahrens bestimmt, d. h. nach Abschluss einer Verweilzeit des nitrathaltigen Wassers im Biomassebett von maximal 20 Stunden. Aus den Messwerten wurde der prozentuale Gesamtstickstoffabbau, d.h. die prozentuale Reduktion des Gesamtstickstoffgehalts gegenüber den im Zulauf gemessenen Werten für Gesamtstickstoffgehalt bzw. Nitratgehalt, ermittelt. Die diesbezüglichen Ergebnisse lassen sich Fig. 2 entnehmen. Aus Fig. 2 ist ersichtlich, dass mit dem erfindungsgemäßen Verfahren in dem künstlichen Abwasser der Gesamtstickstoffgehalt um circa 25 %, bezogen auf den Ausgangswert, auf einen Gesamtstickstoffgehalt von 50 mg/l reduziert werden konnte. In dem Brunnenwasser konnte der Gesamtstickstoffgehalt um fast 70 %, bezogen auf den Ausgangswert, auf 10 mg/l gesenkt werden. Bei dem Abwasser aus der Trinkwasseraufbereitung wurde mit dem erfindungsgemäßen Verfahren sogar ein Gesamtstickstoffabbaugrad von über 90 %, bezogen auf den Ausgangswert, auf einen Gesamtstickstoffgehalt von 30 mg/l erzielt.

### 5. Weiterführende Untersuchung des Nitrat- und Stickstoffabbaus

Darüber hinaus wurden die Einflüsse des pH-Werts, der Gelöstsauerstoffkonzentration, der Verweilzeit des nitrathaltigen Wassers im Schlamm- bzw. Biomassebett und der Bettbelastung auf die Nitratabbaurate untersucht. Die diesbezüglich erhaltenen Ergebnisse sind nachfolgend dargestellt.

### 5.1 Gesamtstickstoffabbau gemessen an der Aufenthaltszeit

In einer weiteren Versuchsreihe wurde die Entwicklung des Gesamtstickstoffabbaugrades während der Aufenthalts- bzw. Verweilzeit des nitrathaltigen Wassers im Schlamm- bzw. Biomassebett untersucht. Das dazu eingesetzte nitrathaltige Abwasser aus der Trinkwasserbehandlung wies im Zulauf, d.h. zu Beginn des erfindungsgemäßen Verfahrens, einen Gesamtstickstoffgehalt von 30 mg/l auf. Das Verfahren wurde über eine Dauer von maximal 22 Stunden bzw. mit einer Verweilzeit des nitrathaltigen Wassers im Reaktor von maximal 22 Stunden durchgeführt. Die Gesamtstickstoffabbaurate über die gesamte Verweilzeit wurde durch regelmäßige Bestimmung des Gesamtstickstoffgehalts im nitrathaltigen Wasser ermittelt. Die diesbezüglich erhaltenen Ergebnisse sind in Fig. 3 dargestellt. Aus Figur 3 ist ersichtlich, dass die Gesamtstickstoffabbaurate nach einer Verweilzeit von 8 Stunden stark ansteigt und nach ungefähr 18 bis 22 Stunden die Sättigung des Abbaus eintritt. Vor dem Hintergrund dieser Ergebnisse erscheint eine Verweilzeit des nitrathaltigen Wassers im Reaktor bzw. Biomassebett im Bereich von 8 bis 22 Stunden als besonders geeignet für das erfindungsgemäße Verfahren.

### 5.2 Verweilzeit, pH-Wert und Gelöstsauerstoffkonzentration

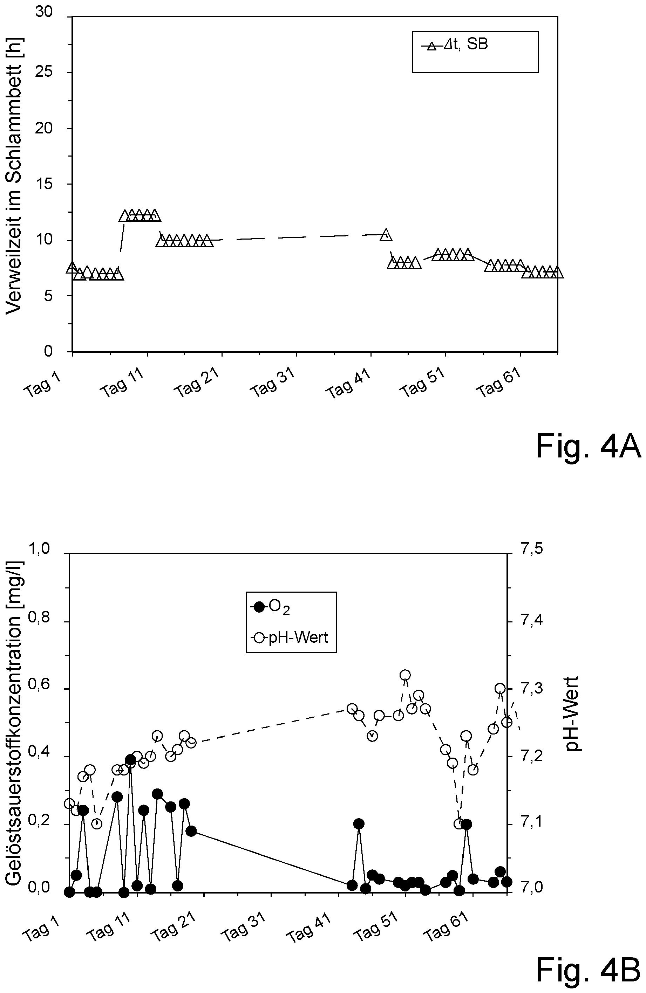

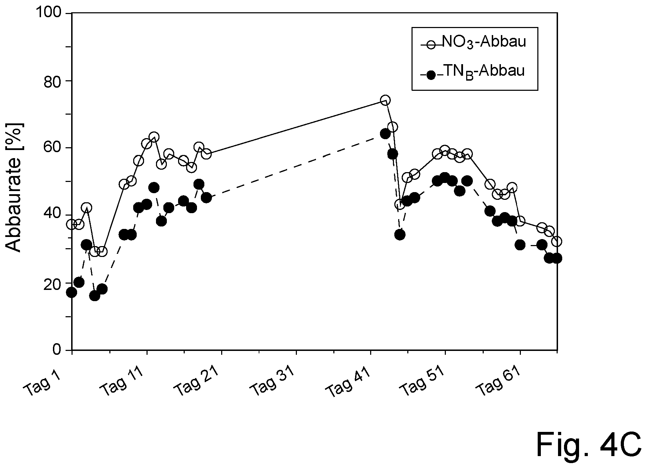

Weiterhin wurde die Abbaurate in Bezug auf den Gesamt- und Nitratstickstoff in Abhängigkeit von Verweilzeit, pH-Wert und Gelöstsauerstoffkonzentrationen im nitrathaltigen Wasser untersucht. Das erfindungsgemäße Verfahren wurde dabei als kontinuierliches Verfahren durchgeführt. In Fig. 4A sind zunächst die jeweiligen Verweilzeiten (Δ*t,SB*) des nitrathaltigen Wassers im Schlamm- bzw. Biomassebett visualisiert. Die Verweilzeiten lagen zwischen 7 und 12,5 Stunden. Darüber hinaus wurden während des Nitrateliminationsverfahrens der pH-Wert und die Gelöstsauerstoffkonzentration im nitrathaltigen Wasser gemessen. Die diesbezüglichen Messwerte sind Fig. 4B zu entnehmen. Aus Fig. 4B ist ersichtlich, dass das Verfahren mit Gelöstsauerstoffkonzentrationen zwischen 0 und 0,3 mg/l, d.h. unter im Wesentlichen anoxischen Bedingungen, und bei pH-Werten zwischen 7,1 und 7,3 durchgeführt wurde. In Fig. 4C sind schließlich die unter den vorgenannten Bedingungen, d.h. Verweilzeit, Gelöstsauerstoffkonzentration und pH-Wert, erzielten Nitratabbauraten (NO₃-Abbau) und Gesamtstickstoffabbauraten (Tn_{B}-Abbau) dargestellt. Über die gesamte Verfahrensdauer wurden Gesamtstickstoffabbauraten zwischen circa 20 und 65 % und darüber hinaus Nitratstickstoffabbauraten im Bereich von 30 bis 80 % gemessen. Insgesamt kann daher mit den zuvor beschriebenen Verfahrensparametern ein deutlicher Abbau des Gesamt- und Nitratstickstoffgehalts in dem nitrathaltigen Wasser gemessen bzw. verzeichnet werden.

### 5.3 Verweilzeit und Bettbelastung

Schließlich wurde auch speziell die Nitratabbaurate durch das erfindungsgemäße Verfahren in Abhängigkeit von der Verweilzeit des nitrathaltigen Wassers im Schlamm- bzw. Biomassebett und der eingesetzten Bettbelastung untersucht. Die dafür eingesetzten nitrathaltigen Wässer wiesen im Zulauf eine Nitratkonzentration von circa 100 mg/l auf.

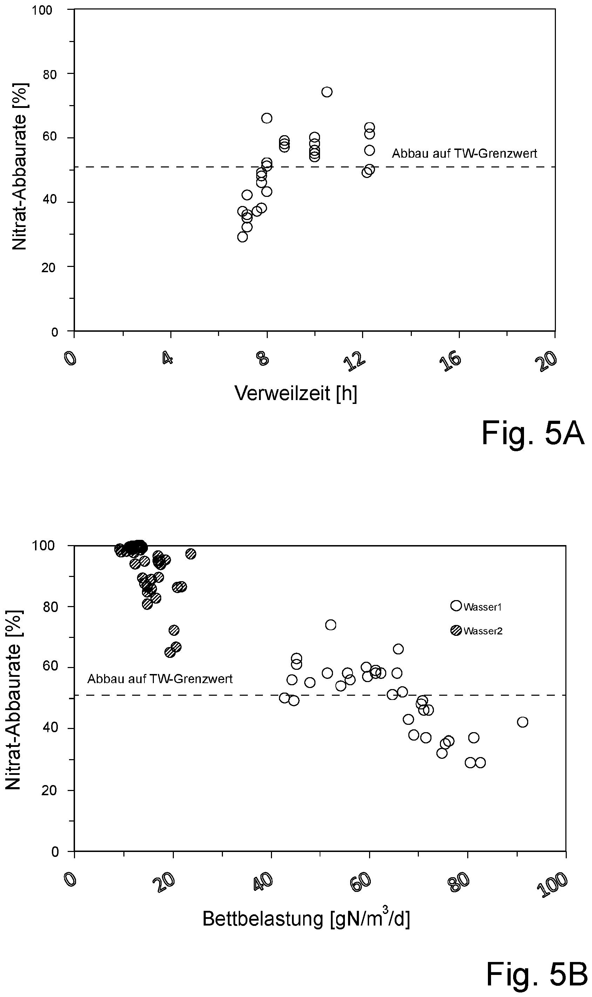

Fig. 5A zeigt die im Zusammenhang mit den Verweilzeiten erhaltenen Ergebnisse. Die Nitratabbaurate wurde für Verweilzeiten zwischen 6,5 und 12 Stunden untersucht. Besonders gute Abbauraten wurden erhalten, wenn die Verweilzeit zwischen 8 und 12 Stunden lag. Mit Verweilzeiten des nitrathaltigen Wassers im Bereich von 8 und 12 Stunden konnte die Nitratstickstoffkonzentration sogar unter den in der Trinkwasserverordnung festgelegten Grenzwert von 50 mg/l gesenkt werden.

In Fig. 5B sind die Nitratabbauraten in Abhängigkeit von der eingesetzten Bettbelastung dargestellt. Der Einfluss der Bettbelastung wurde mit zwei verschiedenen Wässern untersucht. Insgesamt ist aus Fig. 5B ersichtlich, dass die Nitratabbaurate grundsätzlich mit steigender Bettbelastung nachlässt. Mit einer Bettbelastung zwischen 10 und 80 gN/m³/d wurden Nitratabbauraten zwischen 30 und 100 % erzielt. Mit einer Bettbelastung von maximal 60 gN/m³/d konnte die Nitratkonzentration im nitrathaltigen Wasser sogar auf Werte unterhalb des für Trinkwasser zugelassenen Grenzwerts von 50 mg/l gesenkt werden.

### 6. Fazit

Auf Basis der zuvor geschilderten Ergebnisse ist ersichtlich, dass mit dem erfindungsgemäßen Verfahren eine signifikante Nitratelimination in nitrathaltigem Wasser erzielt werden kann. Das erfindungsgemäße Verfahren erlaubt eine sichere Reduzierung des Nitratstickstoffgehalts auf Werte unterhalb des für Trinkwasser zulässigen Grenzwertes von 50 mg/l. Im Übrigen kann die Nitrat- und Gesamtstickstoffabbaurate durch die zielgerichtete Einstellung von Bettbelastung und Verweilzeit sowie pH-Wert und Gelöstsauerstoffkonzentration verbessert werden.

Ausgehend von den im Rahmen der oben geschilderten Ausführungsbeispiele ist ersichtlich, dass besonders gute Ergebnisse im Hinblick auf den Nitrat- und Gesamtstickstoffabbau mit den in der nachfolgenden Tabelle 3 aufgeführten Verfahrensparametern erhalten werden. Mit den nachfolgenden Prozessparametern können Nitratentfernungsraten von über 50 %, bezogen auf den ursprünglichen Nitratgehalt des nitrathaltigen Wassers, erzielt werden. Bei einem ursprünglichen Nitratgehalt von 100 mg/l im nitrathaltigen Wasser kann somit Wasser bereitgestellt werden, welches die Anforderungen der Trinkwasserverordnung in Bezug auf den Nitratgehalt erfüllt.

**Tab. 3: Bevorzugte erfindungsgemäße Verfahrensparameter**

| **Parameter** | **Einheit** | **min.** | **max.** |
|---|---|---|---|
| pH-Wert | | 7 | 7,5 |
| Gelöstsauerstoffkonzentration | mg/l | 0 | 1 |
| Verweilzeit | h | 8 | 22 |
| Bettbelastung | gN/m³/d | 30 | 65 |
| Nitratkonzentration im Zulauf | mg/l | 10 | 100 |
| CSB-Konzentration im Zulauf | mg/l | 5 | 10 |

### Bezugszeichenliste:

- 1: Reaktoranlage
- 2: Reaktortank
- 3: Rührwelle
- 4: Zulauf
- 5: Ablauf
- 6: Überlauf
- 7: Vorlage / Zulaufgefäß
- 8: Ventil
- 9: Messeinrichtungen
- 10: Motor / Antrieb
- 11: Biomasse
- 12: nitrathaltiges Wasser
- 13: Rotation Rührer
- 14: Strömung
- 15: Pumpen

## Patentansprüche

1. Verfahren zur biologischen Reduzierung der Nitratstickstoffkonzentration in nitrathaltigem Wasser mit mikrobieller Nitratelimination, wobei die Nitratelimination lithotroph und unter Einsatz von Biomasse oder Ansiedelung von Biomasse oder beidem durchgeführt wird, wobei das nitrathaltige Wasser durch einen Reaktionsraum geleitet wird und wobei die Biomasse am Stickstoffkreislauf, Methankreislauf, Eisenkreislauf und Schwefelkreislauf beteiligte Mikroorganismen, insbesondere Bakterien oder Archaeen oder beide, enthält,
wobei als Biomasse aus einem heterotrophen, anaeroben Belebtschlammverfahren zur Behandlung von CSB-haltigen Abwässern gewonnener Belebtschlamm eingesetzt wird,
wobei das nitrathaltige Wasser eine Nitratkonzentration im Bereich von 5 bis 500 mg/l und einen chemischen Sauerstoffbedarf CSB [mg O₂/l] im Bereich von 0 bis 50 mg/l, jeweils bezogen auf das nitrathaltige Wasser zum Zeitpunkt der Zuführung in den Reaktionsraum, aufweist,
wobei das Verfahren unter anoxischen Bedingungen durchgeführt wird,
wobei das Verfahren unter kontinuierlicher Grenzschichterneuerung an der Oberfläche der Biomasse durchgeführt wird,
wobei das Verfahren einstufig durchgeführt wird und
wobei das Verfahren bei einem pH-Wert im Bereich von 6 bis 8 durchgeführt wird.

2. Verfahren nach Anspruch 1, wobei das Verfahren ohne Zufuhr von organischen Kohlenstoffquellen durchgeführt wird.

3. Verfahren nach Anspruch 1 oder 2, wobei als nitrathaltiges Wasser Rohwasser und/ oder Abwasser, insbesondere Rohwasser, eingesetzt wird und/oder wobei das nitrathaltige Wasser einen chemischen Sauerstoffbedarf CSB [mg O₂/l] im Bereich von 0 bis 25 mg/l, weiter bevorzugt 0 bis 10 mg/l, bezogen auf das nitrathaltige Wasser zum Zeitpunkt der Zuführung in den Reaktionsraum, aufweist.

4. Verfahren nach einem der vorangehenden Ansprüche, wobei das nitrathaltige Wasser einen biologischen Sauerstoffbedarf BSB₅ im Bereich von 0 bis 75 mg/l, insbesondere höchstens 50 mg/l, vorzugsweise höchstens 40 mg/l, bevorzugt höchstens 30 mg/l, besonders bevorzugt höchstens 20 mg/l, bezogen auf das nitrathaltige Wasser zum Zeitpunkt der Zuführung in den Reaktionsraum, aufweist.

5. Verfahren nach einem der vorangehenden Ansprüche, wobei das nitrathaltige Wasser eine Nitratkonzentration im Bereich von 8 bis 250 mg/l, am meisten bevorzugt 10 bis 100 mg/l, bezogen auf das nitrathaltige Wasser zum Zeitpunkt der Zuführung in den Reaktionsraum, aufweist.

6. Verfahren nach einem der vorangehenden Ansprüche, wobei die Biomasse auf einem Trägermaterial einen Biofilm ausbildet, insbesondere wobei das Trägermaterial (i) anorganische und/oder organische, vorzugsweise anorganische Salze, insbesondere Carbonate, besonders bevorzugt Calciumcarbonat (Kalk); (ii) Metalle und/oder Übergangsmetalle, insbesondere Eisen; und/oder (iii) Nicht-Metalle, insbesondere Schwefel und/oder Stickstoff; enthält.

7. Verfahren nach Anspruch 6, wobei Biomasse in Form von Granulaten und/oder Pellets eingesetzt wird, insbesondere wobei die Granulate und/oder Pellets eine durchschnittliche Partikelgröße, insbesondere einen durchschnittlichen Teilchendurchmesser, im Bereich von 0,01 bis 150 mm, insbesondere 0,05 bis 100 mm, vorzugsweise 0,1 bis 50 mm, bevorzugt 1 bis 25 mm, besonders bevorzugt 2 bis 20 mm, weiter bevorzugt 3 bis 15 mm, noch mehr bevorzugt 5 bis 10 mm, aufweisen.

8. Verfahren nach einem der vorangehenden Ansprüche, wobei die Biomasse, vorzugsweise die Biomasse in Form von Granulaten und/oder Pellets, in dem nitrathaltigen Wasser fluidisiert und/oder dispergiert wird.

9. Verfahren nach einem der vorangehenden Ansprüche, wobei das Verfahren und/oder die Nitratelimination mit einer Bettbelastung [Stickstoffmenge pro Volumen Biomasse pro Zeiteinheit] im Bereich von 0,5 bis 1.000 gN/m³/d, insbesondere 1 bis 500 gN/m³/d, vorzugsweise 5 bis 250 gN/m³/d, bevorzugt 10 bis 100 gN/m³/d, besonders bevorzugt 30 bis 65 gN/m³/d, durchgeführt wird.

10. Verfahren nach einem der vorangehenden Ansprüche, wobei die Grenzschichterneuerung durch Erzeugung einer Strömung in dem nitrathaltigen Wasser und/oder der Biomasse erfolgt.

11. Verfahren nach Anspruch 10, wobei die Grenzschichterneuerung durch Rühren erfolgt, insbesondere wobei Rührgeschwindigkeiten im Bereich von 0,1 bis 50 Umdrehungen pro Minute, insbesondere 0,5 bis 25 Umdrehungen pro Minute, vorzugsweise 0,7 bis 20 Umdrehungen pro Minute, bevorzugt 1 bis 10 Umdrehungen pro Minute, besonders bevorzugt 1,2 bis 5 Umdrehungen pro Minute, noch mehr bevorzugt 1,5 bis 2 Umdrehungen pro Minute, eingesetzt werden.

12. Verfahren nach einem der vorangehenden Ansprüche, wobei das Verfahren und/oder die Nitratelimination bei einem pH-Wert im Bereich von 7 bis 7,5 durchgeführt wird.

13. Verfahren nach einem der vorangehenden Ansprüche, wobei das Verfahren und/oder die Nitratelimination mit Verweilzeiten des nitrathaltigen Wassers im Reaktionsraum im Bereich von 0,5 bis 100 Stunden, insbesondere 1 bis 80 Stunden, vorzugsweise 2 bis 50 Stunden, bevorzugt 5 bis 25 Stunden, besonders bevorzugt 8 bis 22 Stunden, durchgeführt wird.

14. Verfahren nach einem der vorangehenden Ansprüche, wobei dem Verfahren eine Nachbelüftung nachgeschaltet ist, insbesondere wobei die Nachbelüftung in dem gleichen oder einem separaten Reaktionsraum, vorzugsweise einem separaten Reaktionsraum durchgeführt wird.

15. Verfahren nach einem der vorangehenden Ansprüche, wobei dem Verfahren eine Nachklärung und/oder Fällung und/oder Flockung nachgeschaltet ist, insbesondere wobei die Nachklärung und/oder Fällung und/oder Flockung in dem gleichen oder einem separaten Reaktionsraum, vorzugsweise einem separaten Reaktionsraum durchgeführt wird.

## Claims

1. Process for the biological reduction of the nitrate nitrogen concentration in nitrate-containing water with microbial nitrate elimination, wherein the nitrate elimination is carried out lithotrophically and with the use of biomass or colonization of biomass or both, wherein the nitrate-containing water is passed through a reaction chamber and wherein the biomass contains microorganisms, involved in the nitrogen cycle, methane cycle, iron cycle and sulphur cycle, in particular bacteria or archaea or both,
wherein activated sludge obtained from a heterotrophic, anaerobic activated sludge process for the treatment of wastewater containing COD is used as biomass,
wherein the nitrate-containing water has a nitrate concentration in the range from 5 to 500 mg/l and a chemical oxygen demand COD [mg O₂/l] in the range from 0 to 50 mg/l, in each case based on the nitrate-containing water at the time of feeding into the reaction chamber,
wherein the process is carried out under anoxic conditions,
wherein the process is carried out under continuous boundary layer renewal on the surface of the biomass
wherein the process is carried out as a one-step process and
the process is carried out at a pH value in the range from 6 to 8.

2. The process according to claim 1, wherein the process is carried out without supplying organic carbon sources.

3. The process according to claim 1 or 2, wherein raw water and/or waste water, in particular raw water, is used as nitrate-containing water and/or wherein the nitrate-containing water has a chemical oxygen demand COD [mg O₂/l] in the range from 0 to 25 mg/l, further preferably 0 to 10 mg/l, based on the nitrate-containing water at the time of feeding into the reaction chamber.

4. The process according to one of the preceding claims, wherein the nitrate-containing water has a biological oxygen demand BOD₅ in the range from 0 to 75 mg/l, in particular at most 50 mg/l, preferably at most 40 mg/l, further preferably at most 30 mg/l, particularly preferably at most 20 mg/l, based on the nitrate-containing water at the time of feeding into the reaction chamber.

5. The process according to any one of the preceding claims, wherein the nitrate-containing water has a nitrate concentration in the range from 8 to 250 mg/l, most preferably 10 to 100 mg/l, based on the nitrate-containing water at the time of feeding into the reaction chamber.

6. The process according to any one of the preceding claims, wherein the biomass forms a biofilm on a carrier material, in particular wherein the carrier material contains (i) inorganic and/or organic, preferably inorganic salts, in particular carbonates, particularly preferably calcium carbonate (lime); (ii) metals and/or transition metals, in particular iron; and/or (iii) non-metals, in particular sulphur and/or nitrogen.

7. The process according to claim 6, wherein biomass is used in the form of granules and/or pellets, in particular wherein the granules and/or pellets have an average particle size, in particular an average particle diameter, in the range from 0.01 to 150 mm, in particular 0.05 to 100 mm, preferably 0.1 to 50 mm, preferably 1 to 25 mm, more preferably 2 to 20 mm, further preferably 3 to 15 mm, even more preferably 5 to 10 mm.

8. The process according to any one of the preceding claims, wherein the biomass, preferably the biomass in the form of granules and/or pellets, is fluidized and/or dispersed in the nitrate-containing water.

9. The process according to any one of the preceding claims, wherein the process and/or the nitrate elimination is carried out with a bed load [amount of nitrogen per volume of biomass per unit time] in the range from 0.5 to 1,000 gN/m³/d, in particular 1 to 500 gN/m³/d, preferably 5 to 250 gN/m³/d, preferably 10 to 100 gN/m³/d, particularly preferably 30 to 65 gN/m³/d.

10. The process according to any one of the preceding claims, wherein the boundary layer renewal is carried out by generating a flow in the nitrate-containing water and/or the biomass.

11. The process according to claim 10, wherein the boundary layer renewal is carried out by stirring, in particular wherein stirring speeds in the range from 0.1 to 50 revolutions per minute, in particular 0.5 to 25 revolutions per minute, preferably 0.7 to 20 revolutions per minute, preferably 1 to 10 revolutions per minute, particularly preferably 1.2 to 5 revolutions per minute, even more preferably 1.5 to 2 revolutions per minute, are used.

12. The process according to any one of the preceding claims, wherein the process and/or the nitrate elimination is carried out at a pH in the range from 7 to 7.5.

13. The process according to any one of the preceding claims, wherein the process and/or the nitrate elimination is carried out with dwell time of the nitrate-containing water in the reaction chamber in the range from 0.5 to 100 hours, in particular from 1 to 80 hours, preferably from 2 to 50 hours, preferably from 5 to 25 hours, particularly preferably from 8 to 22 hours.

14. The process according to any one of the preceding claims, wherein the method is followed by post-aeration, in particular wherein the post-aeration is carried out in the same or a separate reaction chamber, preferably a separate reaction chamber.

15. The process according to any one of the preceding claims, wherein the process is followed by secondary clarification and/or precipitation and/or flocculation, in particular wherein the secondary clarification and/or precipitation and/or flocculation is carried out in the same or a separate reaction chamber, preferably a separate reaction chamber.

## Revendications

1. Procédé de réduction biologique de la concentration d'azote nitrique dans de l'eau contenant des nitrates avec élimination microbienne des nitrates, dans lequel l'élimination des nitrates est réalisée de manière lithotrophe et en utilisant de la biomasse ou en implantant de la biomasse ou les deux, dans lequel l'eau contenant des nitrates est conduite à travers un espace de réaction et dans lequel la biomasse contient des micro-organismes participant au cycle de l'azote, au cycle du méthane, au cycle du fer et au cycle du soufre, en particulier des bactéries ou des archées ou les deux,
dans lequel on utilise comme biomasse des boues activées obtenues à partir d'un procédé de boues activées hétérotrophe et anaérobie pour le traitement d'eaux usées contenant de la DCO,
l'eau contenant des nitrates présentant une concentration en nitrates dans la plage de 5 à 500 mg/l et une demande chimique en oxygène DCO [mg O₂/l] dans la plage de 0 à 50 mg/l, respectivement par rapport à l'eau contenant des nitrates au moment de l'introduction dans l'espace de réaction,
le procédé étant mis en œuvre dans des conditions anoxiques,
le procédé étant mis en œuvre avec un renouvellement continu de la couche limite à la surface de la biomasse,
le procédé étant mis en œuvre en une seule étape, et
le procédé étant mis en œuvre à un pH compris dans la plage de 6 à 8.

2. Procédé selon la revendication 1, dans lequel le procédé est mis en œuvre sans apport de sources de carbone organique.

3. Procédé selon la revendication 1 ou 2, dans lequel on utilise comme eau contenant des nitrates de l'eau brute et/ou des eaux usées, en particulier de l'eau brute, et/ou dans lequel l'eau contenant des nitrates présente une demande chimique en oxygène DCO [mg O₂/l] dans la plage de 0 à 25 mg/l, de préférence encore de 0 à 10 mg/l, par rapport à l'eau contenant des nitrates au moment de l'amenée dans l'espace de réaction.

4. Procédé selon l'une des revendications précédentes, dans lequel l'eau contenant des nitrates présente une demande biologique en oxygène DBO₅ comprise entre 0 et 75 mg/l, notamment au plus 50 mg/l, de préférence au plus 40 mg/l, de préférence au plus 30 mg/l, de manière particulièrement préférée au plus 20 mg/l, par rapport à l'eau contenant des nitrates au moment de l'introduction dans l'espace de réaction.

5. Procédé selon l'une quelconque des revendications précédentes, dans lequel l'eau contenant des nitrates présente une concentration en nitrates comprise entre 8 et 250 mg/l, plus préférentiellement entre 10 et 100 mg/l, par rapport à l'eau contenant des nitrates au moment de l'introduction dans l'espace de réaction.

6. Procédé selon l'une quelconque des revendications précédentes, dans lequel la biomasse forme un biofilm sur un matériau support, en particulier dans lequel le matériau support contient (i) des sels inorganiques et/ou organiques, de préférence inorganiques, en particulier des carbonates, de manière particulièrement préférée du carbonate de calcium (chaux) ; (ii) des métaux et/ou des métaux de transition, en particulier du fer ; et/ou (iii) des non-métaux, en particulier du soufre et/ou de l'azote.

7. Procédé selon la revendication 6, dans lequel la biomasse est utilisée sous forme de granulés et/ou de pellets, en particulier dans lequel les granulés et/ou les pellets présentent une taille moyenne de particules, en particulier un diamètre moyen de particules, dans la plage de 0,01 à 150 mm, en particulier de 0,05 à 100 mm, de préférence de 0,1 à 50 mm, de préférence de 1 à 25 mm, de manière particulièrement préférée de 2 à 20 mm, de manière encore plus préférée de 3 à 15 mm, de manière encore plus préférée de 5 à 10 mm.

8. Procédé selon l'une quelconque des revendications précédentes, dans lequel la biomasse, de préférence la biomasse sous forme de granulés et/ou de pellets, est fluidifiée et/ou dispersée dans l'eau contenant des nitrates.

9. Procédé selon l'une quelconque des revendications précédentes, dans lequel le procédé et/ou l'élimination des nitrates est réalisé avec une charge du lit [quantité d'azote par volume de biomasse par unité de temps] comprise entre 0,5 et 1000 gN/m³/d, en particulier entre 1 et 500 gN/m³/d, de préférence entre 5 et 250 gN/m^{(3)/d}, de préférence entre 10 et 100 gN/m³/d, de manière particulièrement préférée entre 30 et 65 gN/m³/d.

10. Procédé selon l'une quelconque des revendications précédentes, dans lequel le renouvellement de la couche limite est réalisé en générant un courant dans l'eau contenant des nitrates et/ou dans la biomasse.

11. Procédé selon la revendication 10, dans lequel le renouvellement de la couche limite est effectué par agitation, en particulier dans lequel on utilise des vitesses d'agitation dans la plage de 0,1 à 50 tours par minute, en particulier de 0,5 à 25 tours par minute, de préférence de 0,7 à 20 tours par minute, de préférence de 1 à 10 tours par minute, de manière particulièrement préférée de 1,2 à 5 tours par minute, de manière encore plus préférée de 1,5 à 2 tours par minute.

12. Procédé selon l'une quelconque des revendications précédentes, dans lequel le procédé et/ou l'élimination des nitrates sont réalisés à un pH compris entre 7 et 7,5.

13. Procédé selon l'une quelconque des revendications précédentes, dans lequel le procédé et/ou l'élimination des nitrates est mis en œuvre avec des temps de séjour de l'eau contenant les nitrates dans l'espace de réaction compris entre 0,5 et 100 heures, en particulier entre 1 et 80 heures, de préférence entre 2 et 50 heures, de préférence entre 5 et 25 heures, de manière particulièrement préférée entre 8 et 22 heures.

14. Procédé selon l'une des revendications précédentes, dans lequel le procédé est suivi d'une post-aération, en particulier dans lequel la post-aération est effectuée dans le même espace de réaction ou dans un espace de réaction séparé, de préférence un espace de réaction séparé.

15. Procédé selon l'une des revendications précédentes, dans lequel le procédé est suivi d'une décantation secondaire et/ou d'une précipitation et/ou d'une floculation, en particulier dans lequel la décantation secondaire et/ou la précipitation et/ou la floculation sont effectuées dans le même espace de réaction ou dans un espace de réaction séparé, de préférence un espace de réaction séparé.
